# EUROPÄISCHE PATENTSCHRIFT

(11) **EP 1 953 619 B1**
(45) Veröffentlichungstag und Bekanntmachung des Hinweises auf die Patenterteilung: **01.04.2015**
(21) Anmeldenummer: 07002214.0
(22) Anmeldetag: 01.02.2007
(51) Int. Cl.: G06F 1/30, G06F 11/14

(54) **Verfahren zur Sicherung von Daten einer Datenverarbeitungsanlage sowie Datenverarbeitungsanlage**
Method for saving data in a data processing system and data processing system
Procédé destiné à la sécurisation de données d'une installation de traitement des données et installation de traitement des données

(43) Veröffentlichungstag der Anmeldung: 06.08.2008
(73) Patentinhaber: Siemens Aktiengesellschaft, 80333 München (DE)
(72) Erfinder: Sommer, Frank-Ulrich, 69126 Heidelberg (DE)

(56) Entgegenhaltungen:
- EP-A- 0 256 815
- EP-A2- 0 325 026
- WO-A-03/094002
- US-A1- 2005 044 437
- US-B1- 6 901 298
- CHRIS REYNOLDS ET AL: "The Evolution of Low ESR Double Layer Capacitors" INTERNET CITATION, [Online] März 2004 (2004-03), XP007902292 Gefunden im Internet: URL:http://www.batterypoweronline.com/epri nts/free/avxmarch04.pdf> [gefunden am 2007-05-11]
- SMITH T A ET AL: "Using supercapacitors to improve battery performance" 33RD.ANNUAL IEEE POWER ELECTRONICS SPECIALISTS CONFERENCE. PESC 2002. CONFERENCE PROCEEDINGS. CAIRNS, QUEENSLAND, AUSTRALIA, JUNE 23 - 27, 2002, ANNUAL POWER ELECTRONICS SPECIALISTS CONFERENCE, NEW YORK, NY : IEEE, US, Bd. VOL. 2 OF 4. CONF. 33, 23. Juni 2002 (2002-06-23), Seiten 124-128, XP010596075 ISBN: 0-7803-7262-X
- JOHN MILLER: "Capacitor-Battery Power Sources: Designing for Optimal Performance" PROCEEDINGS OF 5TH INTERNATIONAL SEMINAR ON DOUBLE LAYER CAPACITORS, 4. Dezember 1995 (1995-12-04), - 6. Dezember 1995 (1995-12-06) XP008078806 Boca Raton, Florida
- LOW K S ET AL: "Supervisor ICs monitor battery-powered equipment" MICROPROCESSORS AND MICROSYSTEMS, IPC BUSINESS PRESS LTD. LONDON, GB, Bd. 20, Nr. 7, 17. März 1997 (1997-03-17), Seiten 437-442, XP004073711 ISSN: 0141-9331

## Beschreibung

Die Erfindung betrifft ein Verfahren gemäß dem Oberbegriff des Anspruchs 1. Des Weiteren betrifft die Erfindung eine Datenverarbeitungsanlage gemäß dem Oberbegriff des Anspruchs 2.

Ein derartiges Verfahren bzw. eine derartige Datenverarbeitungsanlage sind im Stand der Technik hinlänglich bekannt.

Aufgrund der Anforderung, Daten schnell und beliebig ändern zu können, ergibt sich bei den heute verfügbaren Speichertechnologien häufig die Notwendigkeit, Speicherbausteine einzusetzen, deren Inhalt nur mit Hilfe einer Energiequelle erhalten bleibt (so genannte flüchtige Speicher). Hierbei kann sich die Notwendigkeit ergeben, Maßnahmen zur Sicherung der Daten bei einem Netzausfall zu ergreifen. Das bekannte Verfahren bzw. die bekannte Datenverarbeitungsanlage wird daher vorzugsweise immer dann verwandt, wenn ein Speicher vorhanden ist, der sich während des Betriebs ändernde Daten enthält, und der Speicherinhalt bei einem Ausfall oder Abschalten der Hauptversorgung, welche in der Regel ein Netzteil ist, erhalten bleiben soll.

Zur Datensicherung beim Ausfall der Stromversorgung ist es bekannt, eine Pufferbatterie zu verwenden, um die Speicherbausteine mit Strom zu versorgen. Die Batterie muss die Speicherbausteine während der gesamten Zeit, während der die Hauptstromversorgung ausgeschaltet ist, mit Strom versorgen. Die maximal zulässige Ausschalt-Dauer ist damit durch die Kapazität der Batterie und die Stromaufnahme der Speicherbausteine bestimmt. In der Regel werden Batterien verwendet, welche eine geringe Selbstentladung und eine hohe Energiedichte haben. Nachteilig bei derartigen Batterien ist jedoch, dass nur ein geringer Entladestrom möglich ist.

Wenngleich die Zeit, während der die Batterie die Speicherbausteine ausreichend mit Strom versorgen kann, relativ groß ist, so treten doch Fälle auf, bei denen diese Zeit nicht ausreicht. Dies kann insbesondere dann der Fall sein, wenn der Hersteller eines Systems bei der Herstellung Daten in den flüchtigen Speicher schreibt und das System erst viel später in Betrieb genommen wird. Hierdurch könnte die Kapazität der Batterie überschritten sein und die im flüchtigen Speicher vorhandenen Daten wären verloren.

Des Weiteren ist es bekannt, zur Sicherung der in dem flüchtigen Speicher vorhandenen Daten diese in einen nichtflüchtigen Speicher wie beispielsweise Flash-Eprom oder EEPROM zu übertragen. Da die zur Übertragung der Daten in den nichtflüchtigen Speicher erforderliche Leistung relativ groß ist, muss auf dem betreffenden System ausreichend Leistung zur Verfügung gestellt werden, um damit nach dem Ausfall der Hauptstromversorgung die Daten aus dem flüchtigen in den nichtflüchtigen Speicher umzukopieren. In der Regel werden zur Energiespeicherung entsprechend große Kondensatoren verwendet, da diese die erforderliche Leistung zur Verfügung stellen können. Wegen des geringen Entladestroms ist es nicht möglich, die zur Übertragung der Daten in den nichtflüchtigen Speicher erforderliche Energie einer zuvor erwähnten Pufferbatterie zu entnehmen.

Zwar wird durch die Übertragung der Daten in den nichtflüchtigen Speicher erreicht, dass die Daten beliebig lange erhalten bleiben, jedoch ist die Baugröße der zum Umkopieren erforderlichen großen Energiespeicher nachteilig.

Aus der US 2005/044437 A1 ist eine Stromversorgung für eine Datenverarbeitungsanlage mit einem Prozessor, einem flüchtigen Speicher, einem nichtflüchtigen Speicher, einem Netzteil, einem ersten Energiespeicher und einer Steuerung bekannt, mittels welcher im flüchtigen Speicher vorhandene Daten bei einem Ausfall des Netzteils zur Sicherung in den nichtflüchtigen Speicher übertragen werden.

Aus "CHRIS REYNOLDS ET AL: 'The Evolution of Low ESR Double Layer Capacitors' INTERNET CITATION, [Online] März 2004 (2004-03), XP007902292, gefunden im Internet: URL:http://www.batterypoweronline.com/eprints/free/ avxmarch04.pdf> [gefunden am 2007-05-11]" ist bekannt, dass die Kombination einer Anordnung von Brennwertzellen mit einem Kondensator eine Stromversorgung bildet, welche kontinuierlich zur Versorgung von Lasten mit geringem Leistungsbedarf und zur Versorgung von Lasten, welche kurzzeitig einen hohen Leistungsbedarf haben, geeignet ist.

Ähnliches ist aus "SMITH T A ET AL: 'Using supercapacitors to improve battery performance' 33RD. ANNUAL IEEE POWER ELECTRONICS SPECIALISTS CONFERENCE. PESC 2002. CONFERENCE PROCEEDINGS. CAIRNS, QUEENSLAND, AUSTRALIA, JUNE 23-27, 2002, ANNUAL POWER ELECTRONIC SPECIALISTS CONFERENCE, NEW YORK, NY: IEEE, US, BD. VOL. 2 OF 4. CONF. 33, 23. Juni 2002 (2002-06-23), Seiten 124-128, XP010596075 ISBN: 0-7803-7262-X" bekannt, wobei als Kondensator insbesondere ein Superkondensator verwendet werden soll. Der Superkondensator liefert die jeweils benötigte Spitzenleistung und die Batterie liefert die Energie.

Des Weiteren ist aus "JOHN MILLER: 'Capacitor-Battery Power Sources: Designing for Optimal Performance' PROCEEDINGS OF 5TH INTERNATIONAL SEMINAR ON DOUBLE LAYER CAPACITORS, 4. Dezember 1995 (1995-12-04), - 6. Dezember 1995 (1995-12-06) XP008078806 Boca Raton, Florida" bekannt, dass bei der Kombination einer Batterie mit einem Kondensator der Kondensator von der Batterie mittels eines DC-DC-Wandlers entkoppelt werden muss, da die Spannung des Kondensators sich während seiner Entladung ändert.

Aus WO 03/094002 ist bekannt, dass die in einem flüchtigen Speicher vorhandenen Daten bei einem Ausfall der Hauptspannungsversorgung zuerst in einen Pufferspeicher übertragen werden und danach mittels einer zusätzlichen Spannungsquelle in einen nichtflüchtigen Speicher übertragen werden.

Es ist Aufgabe der Erfindung, ein eingangs genanntes Verfahren bzw. eine eingangs genannte Datenverarbeitungsanlage derart auszubilden, dass in einem flüchtigen Speicher vorhandene Daten ohne Verwendung eines großen Energiespeichers dauerhaft gesichert werden können.

Im Hinblick auf das Verfahren wird diese Aufgabe durch die im kennzeichnenden Teil des Anspruchs 1, bezüglich der Datenverarbeitungsanlage durch die im kennzeichnenden Teil des Anspruchs 2 angegebenen Maßnahmen gelöst.
Vorteilhafte Weiterbildungen der Erfindung ergeben sich aus den Unteransprüchen.

Dadurch, dass die Datenübertragung von dem flüchtigen Speicher in den nichtflüchtigen Speicher zyklisch erfolgt, muss in vorteilhafter Weise auch die zum Speichern in den nichtflüchtigen Speicher erforderliche Leistung nur zyklisch zur Verfügung stehen. D. h., die zur Speicherung der Daten in den nichtflüchtigen Speicher erforderlichen jeweiligen Teilenergien können sich nach der Zykluszeit bemessen, während der Daten in den nichtflüchtigen Speicher gespeichert werden. Eine kleine Zykluszeit erfordert nur eine kleine Teilenergie. Entsprechend klein kann der betreffende Energiespeicher ausgebildet sein. Die Kapazität des Energiespeichers braucht nur so groß zu sein, dass der nichtflüchtige Speicher sowie die anderen zur Datenübertragung benötigten Bauteile während der Datenübertragung in ausreichendem Maße mit Spannung bzw. Energie versorgt werden. Wegen der zur Übertragung der Daten aus dem flüchtigen Speicher in den nichtflüchtigen Speicher erforderlichen relativ großen Leistung muss der Energiespeicher jedoch einen relativ hohen Entladestrom zulassen. Da dies bei Kondensatoren in der Regel der Fall ist, werden als Energiespeicher regelmäßig Kondensatoren verwendet.

Während der Zeit, während der keine Daten in den nichtflüchtigen Speicher übertragen werden, d. h. während der Datenübertragungspausen, kann der Energiespeicher wieder so weit aufgeladen werden, dass er den flüchtigen Speicher während des nächsten Datenübertragungszyklus wieder ausreichend mit Energie versorgen kann.

In vorteilhafter Weise erfolgt die Aufladung des ersten Energiespeichers aus einem zweiten Energiespeicher. Der zweite Energiespeicher braucht keinen hohen Entladestrom zuzulassen, da er nur die zur Aufladung des ersten Energiespeichers benötigte geringe Leistung zur Verfügung stellen muss. Er kann daher eine kleine Baugröße haben. Der zweite Energiespeicher kann somit in vorteilhafter Weise ein Energiespeicher sein, wie er zur Pufferung des flüchtigen Speichers verwendet wird. Dann bemisst sich die vom zweiten Energiespeicher zur Verfügung zu stellende Leistung aus der zur Pufferung des flüchtigen Speichers erforderlichen Leistung sowie der zur Aufladung des ersten Energiespeichers benötigten Leistung.

Das Energiemanagement wird in vorteilhafter Weise mittels einer Ladesteuerung vorgenommen. Die Ladesteuerung sorgt dafür, dass der erste Energiespeicher während der Datenübertragungspausen aus dem zweiten Energiespeicher aufgeladen wird und dass die Übertragung der Daten von dem flüchtigen Speicher in den nichtflüchtigen Speicher beginnt, wenn im ersten Energiespeicher genügend Energie vorhanden ist. Hierzu erfasst die Ladesteuerung den Ladezustand des ersten Energiespeichers.

In vorteilhafter Weise kann die Datensicherung zeitverzögert gestartet werden. D. h., nach einem Ausfall des Netzteils beginnt die Datenübertragung aus dem flüchtigen Speicher in den nichtflüchtigen Speicher zeitverzögert. Hierdurch wird bei kurzen Unterbrechungen des Netzteils keine Datenübertragung vorgenommen. Die hierdurch gesparte Energie wirkt sich sehr vorteilhaft auf die Lebensdauer des zweiten Energiespeichers aus.

Die Geschwindigkeit, mit der der erste Energiespeicher geladen wird, wird vorzugsweise unter Berücksichtigung der Eigenschaften des ersten Energiespeichers sowie des zweiten Energiespeichers gewählt. Hierbei sollte ein Kompromiss zwischen optimalem Ladestrom des ersten Energiespeichers und dem optimalen Entladestrom des zweiten Energiespeichers gewählt werden. Zur Erreichung von optimalen Bedingungen kann der Ladezyklus des ersten Energiespeichers durch eine oder mehrere Pausen unterbrochen werden, in der keine Ladung des ersten Energiespeichers erfolgt.

Der Vorteil des erfindungsgemäßen Verfahrens bzw. der erfindungsgemäßen Datenverarbeitungsanlage gegenüber einer bekannten Batteriepufferung des flüchtigen Speichers besteht in der unbegrenzten Pufferdauer, da der Pufferstrom nach Abschluss der Datenübertragung nahezu Null ist.

Gegenüber der Datensicherung mittels einer kontinuierlichen Datenübertragung von einem flüchtigen Speicher in einen nichtflüchtigen Speicher besteht bei dem erfindungsgemäßen Verfahren bzw. bei der erfindungsgemäßen Datenverarbeitungsanlage der Vorteil darin, dass der regelmäßig als Kondensator ausgebildete Energiespeicher zur Versorgung des nichtflüchtigen Speichers mit Energie eine geringe Kapazität und insbesondere eine geringe Baugröße haben kann.

Zwar ist die zur Datenübertragung von dem flüchtigen Speicher in den nichtflüchtigen Speicher erforderliche Energie etwa gleichgroß wie bei dem bekannten Verfahren, da die Energie jedoch in einem zweiten Energiespeicher, welcher in der Regel eine Batterie ist, gespeichert ist, kann die Baugröße des zweiten Energiespeichers wesentlich kleiner sein als die Baugröße eines entsprechenden Kondensators mit gleichem Energieinhalt; denn die Energiedichte in einer Batterie ist wesentlich höher als in einem Kondensator. Zudem ist in einer Datenverarbeitungsanlage regelmäßig ohnehin eine Batterie beispielsweise zur Stromversorgung einer Echtzeituhr vorhanden, welche zur zyklischen Ladung des Kondensators verwendet werden kann. Dies wirkt sich sehr vorteilhaft auf die Kosten aus.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Fig. 1: ein Blockschaltbild einer ersten schematischen Anordnung einer erfindungsgemäßen Datenverarbeitungsanlage,
- Fig. 2: ein Zeitdiagramm einer betreffenden Datensicherung,
- Fig. 3: ein Blockschaltbild einer zweiten schematischen Anordnung einer erfindungsgemäßen Datenverarbeitungsanlage und
- Fig. 4: ein Zeitdiagramm einer betreffenden Datensicherung.

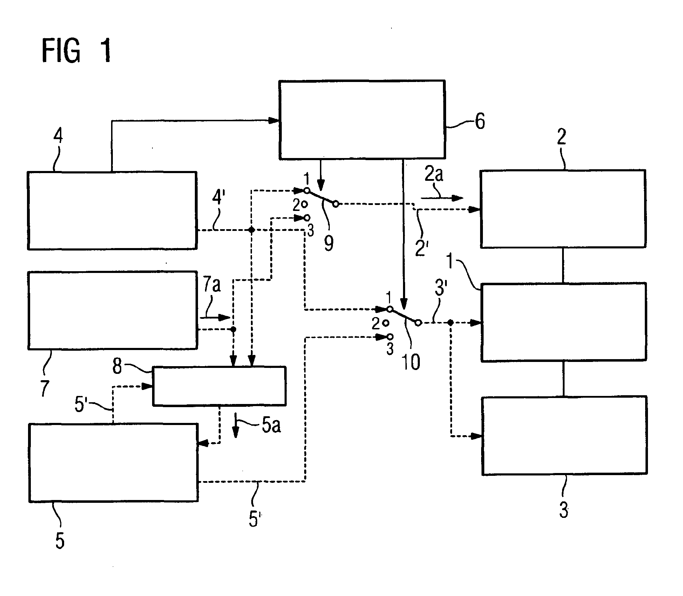

Wie Fig. 1 entnommen werden kann, weist eine erfindungsgemäße Datenverarbeitungsanlage einen Prozessor 1 auf, welcher einerseits mit einem flüchtigen Speicher 2, wie beispielsweise SRAM, SDRAM oder Ähnliches, und andererseits mit einem nichtflüchtigen Speicher 3, wie beispielsweise Flash-EPROM, EEPROM oder Ähnliches, verbunden ist. Zur Versorgung des Prozessors 1 sowie des flüchtigen Speichers 2 als auch des nichtflüchtigen Speichers 3 mit Energie ist ein Netzteil 4 vorhanden. Das Netzteil 4 ist über einen ersten Schalter 9 mit dem flüchtigen Speicher 2 sowie über einen zweiten Schalter 10 mit dem Prozessor 1 und dem nichtflüchtigen Speicher 3 verbunden.

Des Weiteren ist ein als Kondensator ausgebildeter erster Energiespeicher 5 vorhanden, welcher zur Energieversorgung mittels des zweiten Schalters 10 mit dem Prozessor 1 und dem nichtflüchtigen Speicher 3 verbunden werden kann. Weiterhin ist ein als Lithium-Batterie ausgebildeter zweiter Energiespeicher 7 vorhanden, welcher mittels des ersten Schalters 9 zur Pufferung mit dem flüchtigen Speicher 2 verbunden werden kann.

Mittels einer Ladesteuerung 8, welche mit dem ersten Energiespeicher 5 verbunden ist, wird der Ladezustand des ersten Energiespeichers 5 überwacht und seine Aufladung gesteuert. Hierzu ist die Ladesteuerung 8 weiterhin einerseits mit dem Netzteil 4 verbunden und andererseits mit dem zweiten Energiespeicher 7. Darüber hinaus ist die Ladesteuerung 8 noch mit einer Steuerung 6 verbunden, mittels welcher die Datensicherung gesteuert wird.

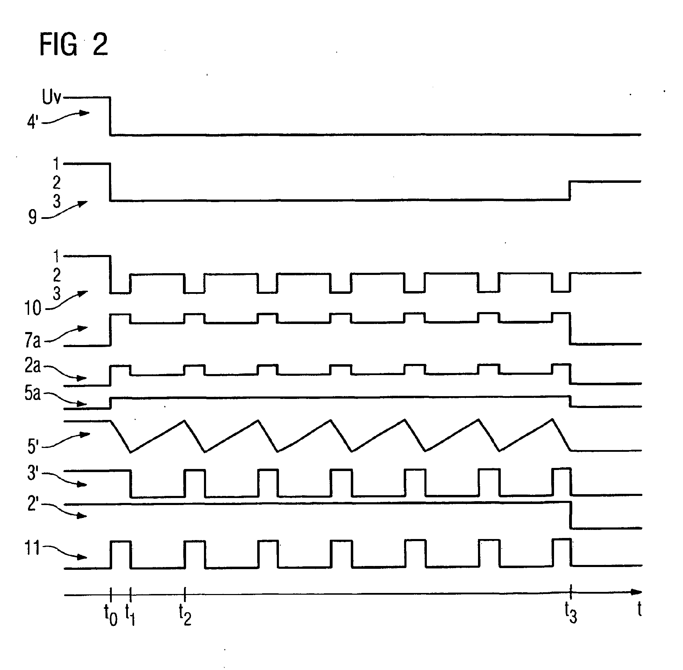

Die Funktion der in Fig. 1 dargestellten Anordnung wird nun anhand des in Fig. 2 dargestellten Zeitdiagramms erläutert, wobei 4' die Ausgangsspannung des Netzteils 4 darstellt, 9 die Stellung des ersten Schalters 9 angibt, 10 die Stellung des zweiten Schalters 10 angibt, 7a den Ausgangsstrom der Lithium-Batterie 7 darstellt, 2a den Eingangsstrom des flüchtigen Speichers 2 darstellt, 5a den Ladestrom des Kondensators 5 darstellt, 5' die Spannung des Kondensators 5 darstellt, 3' die Versorgungsspannung des nichtflüchtigen Speichers 3 bzw. des Prozessors 1 darstellt, 2' die Versorgungsspannung des flüchtigen Speichers 2 darstellt und 11 den Zustand der Datenübertragung vom flüchtigen Speicher 2 in den nichtflüchtigen Speicher 3 angibt.

Solange das Netzteil 4 eingeschaltet ist und keine Störung vorliegt, liegt an seinem Ausgang 4' die Ausgangsspannung Uᵥ an. Dies erkennt die Steuerung 6 und veranlasst, dass sich der erste Schalter 9 und der zweite Schalter 10 in ihrer ersten Schaltstellung 1 befinden. Hierdurch liegt die Ausgangsspannung 4' des Netzteils 4 am flüchtigen Speicher 2 als Versorgungsspannung 2' sowie am nichtflüchtigen Speicher 3 und am Prozessor 1 als Versorgungsspannung 3' an. Der Kondensator 5 ist vollständig geladen.

Zum Zeitpunkt t₀ wird das Netzteil 4 ausgeschaltet oder tritt am Netzteil 4 eine Störung auf, sodass die Ausgangsspannung 4' Null wird. Dies erkennt die Steuerung 6 und veranlasst, dass der erste Schalter 9 und der zweite Schalter 10 die dritte Schaltstellung einnehmen. Hierdurch ist der flüchtige Speicher 2 mit der Lithium-Batterie 7 verbunden, d. h., seine Versorgungsspannung 2' ist weiterhin vorhanden.

Des Weiteren ist der Prozessor 1 sowie der nichtflüchtige Speicher 3 mit dem Kondensator 5 verbunden.

Die Ladesteuerung 8 erkennt die volle Kondensatorspannung 5', d. h. den vollen Ladezustand des Kondensators 5, und veranlasst den Prozessor 1, Daten aus dem flüchtigen Speicher 2 in den nichtflüchtigen Speicher 3 zu kopieren (11). Hierdurch erhöht sich der in den flüchtigen Speicher 2 fließende Strom 2a und damit auch der von der Lithium-Batterie 7 abgegebene Strom 7a. Durch die beim Kopieren 11 der Daten in den nichtflüchtigen Speicher 3 vom nichtflüchtigen Speicher 3 benötigte Energie verringert sich die Ladung des Kondensators 5, d. h., die Spannung 5' des Kondensators 5 nimmt ab.

Erreicht die Spannung 5' des Kondensators 5 einen unteren Schwellwert, wird dies von der Ladesteuerung 8 erkannt, welche daraufhin veranlasst, dass die Datenübertragung aus dem flüchtigen Speicher 2 in den nichtflüchtigen Speicher 3 unterbrochen wird und der zweite Schalter 10 seine zweite Schaltstellung einnimmt. Dies ist beim Zeitpunkt t₁ der Fall.

Nachdem die Datenübertragung unterbrochen ist, steigt die Kondensatorspannung 5' wieder an, da dem Kondensator 5 keine Energie mehr entnommen wird. Erreicht sie einen oberen Schwellwert, erkennt dies die Ladesteuerung 8 und veranlasst erneut eine Datenübertragung aus dem flüchtigen Speicher 2 in den nichtflüchtigen Speicher 3. Dies ist zum Zeitpunkt t₂ der Fall.

Durch die Ladung des Kondensators erhöht sich der aus der Lithium-Batterie 7 fließende Strom 7a auf seinen Maximalwert. Während der Datenübertragung muss die Lithium-Batterie 7 so viel Strom 7a liefern, wie der flüchtige Speicher 2 zum Kopieren der Daten benötigt sowie zum Laden des Kondensators 5 benötigt wird.

Der Kondensator 5 wird zwar während des Kopierens der Daten weiterhin aus der Lithium-Batterie 7 geladen, wodurch der in den Kondensator 5 fließende Ladestrom 5a konstant ist. Dadurch, dass die dem Kondensator 5 entnommene Energie aber beim Kopieren der Daten wesentlich höher ist als die ihm aus der Lithium-Batterie 7 zugeführte Energie, fällt die Kondensatorspannung 5' jedoch ab. Selbstverständlich könnte das Aufladen des Kondensators 5 aber auch während der Datenübertragung unterbrochen werden.

Der vorstehend genannte Vorgang wiederholt sich so lange, bis alle zu sichernden Daten aus dem flüchtigen Speicher 2 in den nichtflüchtigen Speicher 3 kopiert wurden. Dies ist zum Zeitpunkt t₃ der Fall.

Nachdem alle zu sichernden Daten in den nichtflüchtigen Speicher 3 kopiert wurden, veranlasst die Steuerung 6, dass der erste Schalter 9 und der zweite Schalter 10 ihre zweite Schaltstellung einnehmen. Hierdurch werden der flüchtige Speicher 2 sowie der Prozessor 1 und der nichtflüchtige Speicher 3 nicht mehr mit Energie versorgt. D. h. insbesondere, dass die Lithium-Batterie 7 im Wesentlichen keine Energie mehr abzugeben braucht. Dies wirkt sich besonders vorteilhaft auf die Lebensdauer der Lithium-Batterie 7 aus.

Aus Gründen der Vereinfachung wurden nicht alle in der Praxis benötigten Spannungen aufgeführt. Sofern Komponenten wie der Prozessor verschiedene Versorgungsspannungen benötigen, müssen entsprechende DC/DC-Wandler oder Spannungsregler verwendet werden. Letztere sind auch erforderlich, um aus der veränderlichen Spannung des Kondensators konstante Spannungen zu erzeugen.

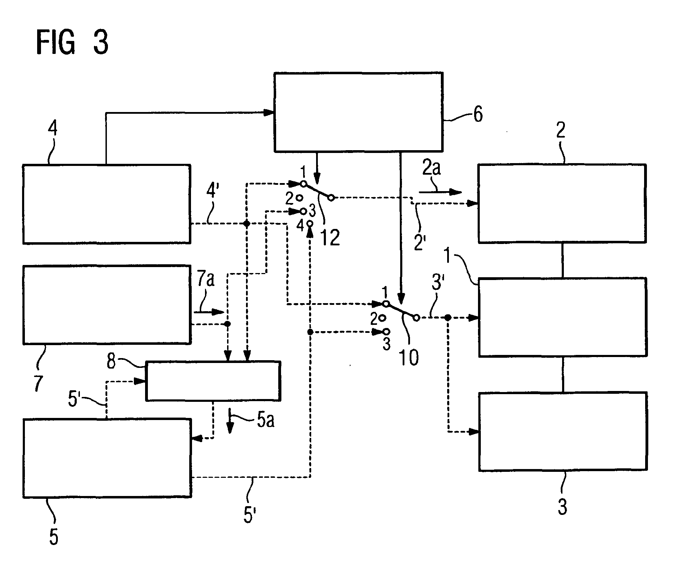

Die in Fig. 3 dargestellte Ausführungsform entspricht im Wesentlichen der in Fig. 1 dargestellten Ausführungsform. Statt eines ersten Schalters 9 mit drei Schaltstellungen ist jedoch ein erster Schalter 12 mit vier Schaltstellungen vorhanden. In der vierten Schaltstellung des ersten Schalters 12 ist der flüchtige Speicher 2 mit dem Kondensator 5 verbunden, sodass der flüchtige Speicher 2 seine Versorgungsspannung 2' aus dem Kondensator 5 bezieht, d. h., dass die Versorgungsspannung 2' des flüchtigen Speichers 2 der (geregelten bzw. aufbereiteten) Ausgangsspannung 5' des Kondensators 5 entspricht.

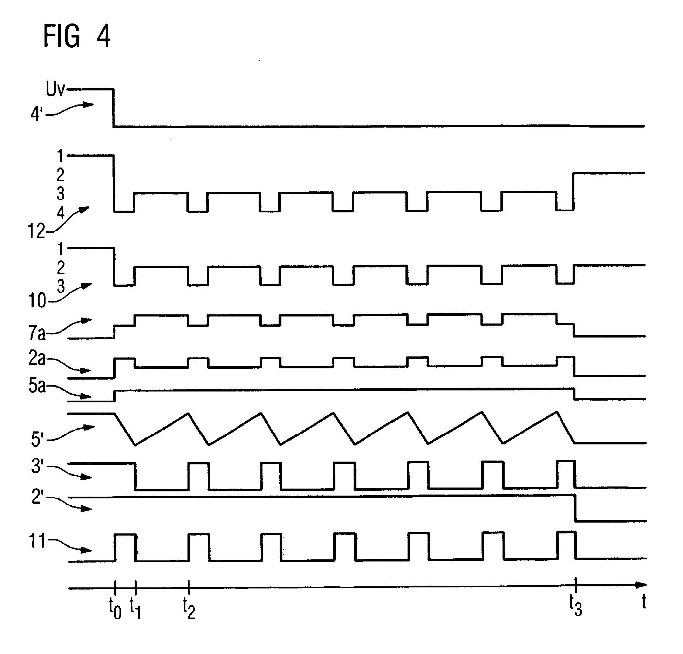

Die Funktion der in Fig. 3 dargestellten Anordnung entspricht im Wesentlichen ebenfalls der Funktion der in Fig. 1 dargestellten Anordnung. Die Unterschiede werden anhand des in Fig. 4 dargestellten Zeitdiagramms erläutert, wobei 12 der Schalterstellung des ersten Schalters 12 entspricht.

Bei der in Fig. 3 dargestellten Ausführungsform veranlasst die Ladesteuerung 8, dass sich der erste Schalter 12 in seiner vierten Schaltstellung befindet, wenn Daten aus dem flüchtigen Speicher 2 in den nichtflüchtigen Speicher 3 kopiert werden. Während der Pausen der Datenübertragung befindet sich der erste Schalter 12 in seiner dritten Schaltstellung 3. Letzteres ist bei der in Fig. 1 dargestellten Ausführungsform ebenso der Fall.

Dadurch, dass sich der erste Schalter 12 während der Datenübertragung vom flüchtigen Speicher 2 in den nichtflüchtigen Speicher 3 in der vierten Schaltstellung befindet, erhält der flüchtige Speicher 2 seine Versorgungsspannung 2' aus dem Kondensator 5. Hierdurch ist gewährleistet, dass der flüchtige Speicher 2 während der Datenübertragung mit der hierzu erforderlichen erhöhten Leistung versorgt werden kann. Die Lithium-Batterie 7 kann daher so dimensioniert sein, dass sie lediglich den Ladestrom des Kondensators 5 liefert.

## Patentansprüche

1. Verfahren zur Sicherung von Daten einer einen ersten und einen zweiten Energiespeicher (5, 7) aufweisenden Datenverarbeitungsanlage durch Übertragung der Daten aus einem flüchtigen Speicher (2) in einen nichtflüchtigen Speicher (3), wobei der flüchtige Speicher (2) mittels des zweiten Energiespeichers (7) gepuffert wird, **dadurch gekennzeichnet, dass** zyklisch Teilmengen der zu übertragenden Daten in den nichtflüchtigen Speicher (3) übertragen werden, wobei ein Zyklus aus einer Datenübertragungsphase, während der Daten übertragen werden, und einer Datenübertragungspause, während der keine Daten übertragen werden, besteht, und der nichtflüch- ; tige Speicher (3) während der Datenübertragungsphasen aus dem ersten Energiespeicher (5) mit Spannung versorgt wird, welcher während der Datenübertragungspausen aus dem zweiten Energiespeicher (7) aufgeladen wird.

2. Datenverarbeitungsanlage mit einem Prozessor (1), einem flüchtigen Speicher (2), einem nichtflüchtigen Speicher (3), einem Netzteil (4), einem ersten und einem zweiten Energiespeicher (5, 7) und einer Steuerung (6), mittels welcher im flüchtigen Speicher (2) vorhandene Daten bei einem Ausfall des Netzteils (4) zur Sicherung in den nichtflüchtigen Speicher (3) übertragen werden, wobei der zweite Energiespeicher (7) den flüchtigen Speicher (2) puffert, **dadurch gekennzeichnet, dass** die Datenverarbeitungsanlage dazu ausgebildet ist,
- bei der Datenübertragung wenigstens einen Teil der im flüchtigen Speicher (2) vorhandenen Daten zyklisch in den nichtflüchtigen Speicher (3) zu übertragen, wobei ein Zyklus aus einer Datenübertragungsphase, während der Daten übertragen werden, und einer Datenübertragungspause, während der keine Daten übertragen werden, besteht, und
- den nichtflüchtigen Speicher (3) während der Datenübertragungsphasen aus dem ersten Energiespeicher (5) mit Spannung zu versorgen, wobei die Datenverarbeitungsanlage eine Ladesteuerung (8) aufweist, mittels welcher der erste Energie-Reinschrift speicher (5) während der Datenübertragungspausen aus dem zweiten Energiespeicher (7) aufgeladen wird.

3. Datenverarbeitungsanlage nach Anspruch 2, **dadurch gekennzeichnet, dass** die Ladesteuerung (8) den Ladezustand des ersten Energiespeichers (5) erfasst und den Zyklus der Datenübertragung in Abhängigkeit des Ladezustands des ersten Energiespeichers (5) einstellt.

4. Datenverarbeitungsanlage nach einem der Ansprüche 2 oder 3, **dadurch gekennzeichnet, dass** die Datenübertragung nach einem Ausfall des Netzteils (4) zeitverzögert beginnt.

## Claims

1. Method for saving data in a data processing system having a first energy store (5) and a second energy store (7) by transmitting the data from a volatile memory (2) to a non-volatile memory (3), the volatile memory (2) being buffered by means of the second energy store (7), **characterized in that** subsets of the data to be transmitted are cyclically transmitted to the non-volatile memory (3), a cycle consisting of a data transmission phase, during which data are transmitted, and a data transmission pause, during which no data are transmitted, and the non-volatile memory (3) is supplied with voltage, during the data transmission phases, from the first energy store (5) which is charged from the second energy store (7) during the data transmission pauses.

2. Data processing system having a processor (1), a volatile memory (2), a non-volatile memory (3), a power supply unit (4), a first energy store (5) and a second energy store (7) and a controller (6) which is used to transmit data in the volatile memory (2) to the non-volatile memory (3) for saving if the power supply unit (4) fails, the second energy store (7) buffering the volatile memory (2), **characterized in that** the data processing system is designed
- to cyclically transmit at least some of the data in the volatile memory (2) to the non-volatile memory (3) during data transmission, a cycle consisting of a data transmission phase, during which data are transmitted, and a data transmission pause, during which no data are transmitted, and
- to supply the non-volatile memory (3) with voltage from the first energy store (5) during the data transmission phases, the data processing system having a charging controller (8) which is used to charge the first energy store (5) from the second energy store (7) during the data transmission pauses.

3. Data processing system according to Claim 2, **characterized in that** the charging controller (8) detects the state of charge of the first energy store (5) and adjusts the data transmission cycle on the basis of the state of charge of the first energy store (5).

4. Data processing system according to either of Claims 2 and 3, **characterized in that** data transmission begins with a time delay after the power supply unit (4) has failed.

## Revendications

1. Procédé de sécurisation de données d'une installation de traitement de données ayant un premier et un deuxième accumulateurs ( 5, 7 ) d'énergie par transfert des données d'une mémoire ( 2 ) volatile à une mémoire ( 3 ) non-volatile, la mémoire ( 2 ) volatile étant tamponnée au moyen du deuxième accumulateur ( 7 ) d'énergie, **caractérisé en ce que** des sous- ensembles des données à transférer sont transférés cycliquement dans la mémoire ( 3 ) non-volatile, un cycle étant constitué d'une phase de transfert de données, pendant laquelle les données sont transférées, et d'une pause de transfert de données, pendant laquelle des données ne sont pas transférées, et, pendant les phases de transfert de données, la mémoire ( 3 ) non-volatile est alimentée en tension à partir du premier accumulateur ( 5 ) d'énergie, lequel est chargé à partir du deuxième accumulateur ( 7 ) d'énergie pendant les pauses de transfert de données.

2. Installation de traitement de données, comprenant un processeur ( 1 ), une mémoire ( 2 ) volatile, une mémoire ( 3 ) non-volatile, un bloc ( 4 ) d'alimentation, un premier et un deuxième accumulateurs ( 5, 7 ) d'énergie et une commande ( 6 ), au moyen de laquelle des données présentes dans la mémoire ( 2 ) volatile sont, si le bloc ( 4 ) d'alimentation tombe en panne, transférées pour la sécurisation dans la mémoire ( 3 ) non-volatile, le deuxième accumulateur ( 7 ) d'énergie tamponnant la mémoire ( 2 ) volatile, **caractérisée en ce que** l'installation de traitement de données est constituée
- pour, lors du transfert de données, transférer cycliquement à la mémoire ( 3 ) non-volatile au moins une partie des données présentes dans la mémoire ( 2 ) volatile, un cycle étant constitué d'une phase de transfert de données, pendant laquelle des données sont transférées, et d'une pause de transfert de données, pendant laquelle des données ne sont pas transférées, et
- pour alimenter en tension, à partir du premier accumulateur ( 5 ) d'énergie, la mémoire ( 3 ) non-volatile pendant des phases de transfert de données, l'installation de traitement de données ayant une commande ( 8 ) de charge, au moyen de laquelle le premier accumulateur ( 5 ) d'énergie est chargé à partir du deuxième accumulateur ( 7 ) d'énergie pendant les pauses de transfert de données.

3. Installation de traitement de données suivant la revendication 2, **caractérisée en ce que** la commande ( 8 ) de charge détecte l'état de charge du premier accumulateur ( 5 ) d'énergie et règle le cycle du transfert de données en fonction de l'état de charge du premier accumulateur ( 5 ) d'énergie.

4. Installation de traitement de données suivant l'une des revendications 2 ou 3, **caractérisée en ce que** le transfert de données commence d'une manière retardée dans le temps après une panne du bloc ( 4 ) d'alimentation.
